# EUROPEAN PATENT APPLICATION

(11) **EP 1 525 979 A1**
(43) Date of publication of application: **27.04.2005**
(21) Application number: 03447266.2
(22) Date of filing: 24.10.2003
(51) Int. Cl.: B32B 27/08, B65D 65/40, B32B 31/00

(54) **one-portion pack**

(71) Applicant: Amcor Flexibles Europe A/S, 8700 Horsens (DK)
(72) Inventor: Plaetinck, Lieven, 9270 Kalken-Laarne (BE)
(74) Representative: Van Malderen, Michel

(57) **Abstract**

The present invention is related to one-portion packs comprising a multilayer rigid sheet structure (1), a thermoset coating layer (2), a protective layer (3) and a printing (7), wherein said printing (7) is situated in-between said protective film (3) and said multilayer rigid structure (1).

## Description

### Field of the invention

The present invention is related to one-portion packs and in particular to a multilayer film sequence with improved characteristics in a particular production process.

### Description of the problem and state of the art

For the packaging of portion packs containing liquid or viscous products such as sauces, soft cheeses or liquid soaps, rigid multilayer sheets of 100 to 500*µ*m thickness are currently used.

These sheets are generally based on deep-drawable polymers from which indicative examples are PS, PVC, APET, PP and are further generally combined with PE or his copolymers to provide sealing or with PE peel formulations well known by those skilled in the art for easy-opening.

In the case where oxygen barrier properties are needed for shelf-life protection of the product, a gas barrier such as an EVOH layer is included into the structure.
Examples of existing multilayer combinations in the prior art are:
- Printing /PP / tielayer / PE
- Printing /PVC / tielayer / PE peel
- Printing /APET / tielayer / PE peel
- Printing /PS / tielayer / EVOH / tielayer / PE
- Printing /PS / tielayer / EVOH / tielayer / PE
The polymer types used herein are well known by those skilled in the art.

These structures are usually produced by means of adhesive lamination, heat lamination, extrusion coating, co-extrusion or a combination thereof and can be considered as a full entity.

In a final application step for portion packs or the prior art, the sheets are printed on top of the multilayer entity (PVC, PP, APET or PS) - side in order to provide the customer with relevant information about the packaging product and/or for decorative reasons.

The problem however with outside printing is the risk of direct contact of the ink with the food and the mouth. Since only a limited number of inks are food approved, which strongly limits the choice of the inks for the converter, direct contact printing implies considerable risk for the end-user, in particular in the case of food packaging.

Another problem with the existing prior art structures is the processability on high-speed packaging lines producing portion packs. Conventional machines run at 15 cycles/min (Unifill TR86, TF01) but high-speed packaging lines run at speeds equal or higher than 25 cycles/min (e.g. Unifill TF02, TF15 and TR96) or even at 40 cycles/min (Sarong). These speeds are difficult to manage for prior art film structures.

At these speeds, the limiting factor is always the heat transmission into the multilayer sheet. For that reason, high sealing temperatures are used and generally a temperature resistance above 150-160°C is required. The consequence is that the outside printed layer becomes damaged, resulting in irregular deformations of the film and bad transport on the packaging line.

An additional problem is that during start-stop situations on high-speed packaging lines, where the sheet structure becomes subjected to additional heat, the prior art structures stick to the heating plates.

The patent literature is very poor on one-portion packs and in particular on one-portion packs containing liquids.

Document US 4,567,986 discloses a multilayer sheet for unit portion packs for pills, tablets, capsules or other solid product items, wherein two webs are heat-sealed together in order to define a plurality of cavity-forming regions containing a single item. In this document, particular slit lines are chosen to cancel the indiscriminate access to the contents of the package.

Document JP 9057919 discloses a portion pack with a lid material and a laminated main body. An overprint varnish is applied to protect the printed face. Burning and printing properties are improved.

### Description of the figures

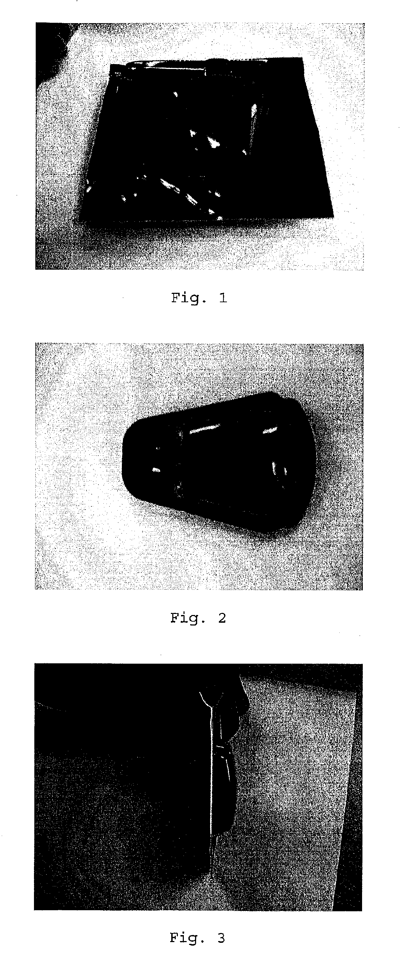

Figure 1 represents a one-portion pack according to the invention before the peripheral side cut of the multilayer sheet.

Figure 2 represents a top view of the finished pack.

Figure 3 represents a profile view of the finished pack.

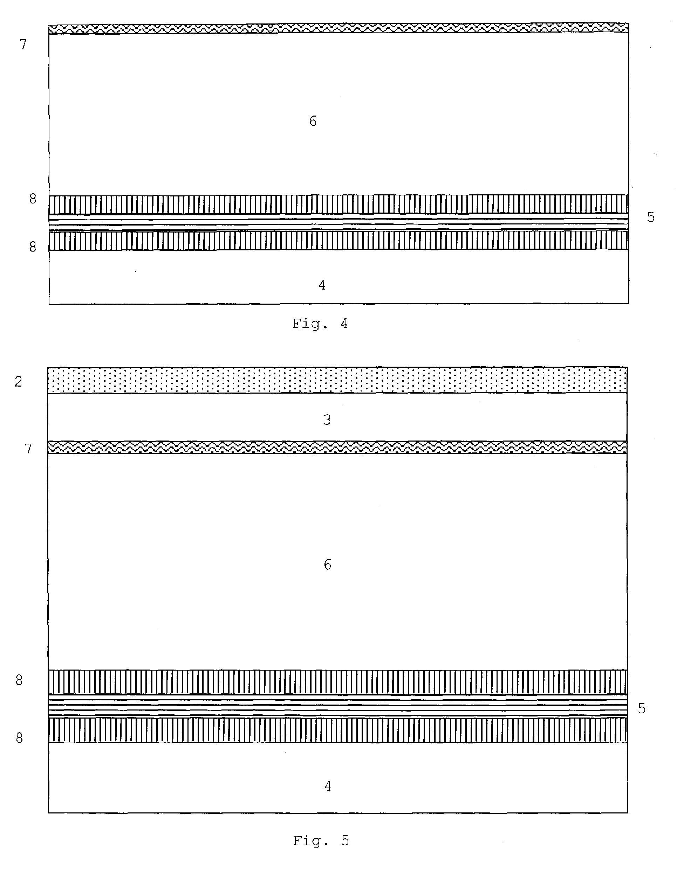

Figure 4 represents a view of the multilayer sequence used in one-portion packs in the prior art.

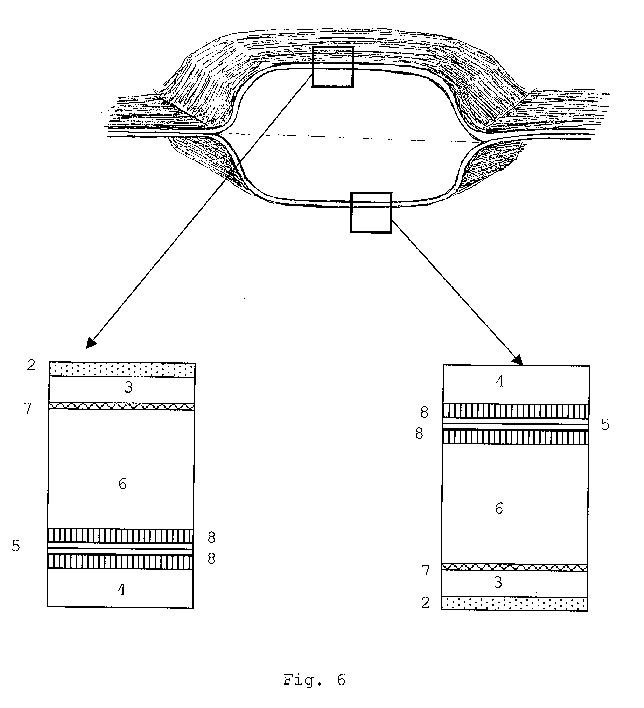

Figure 5 represents a view of the multilayer sequence of the invention for the improved one-portion packs.

Figure 6 represents the positioning of the multilayer sequence of the invention for the improved one-portion packs.

### Aims of the invention

The aim of the present invention is to disclose a multilayer sequence for a one-portion pack with reduced food contamination hazard for the end user that is compatible with high-speed packaging lines (25 to 40 cycles/minute). The one-portion pack multilayer sequence of the present invention represents a solution for the problems described in the prior art.

### Summary of the invention

The present invention discloses a one-portion pack comprising a multilayer rigid sheet structure, a thermoset coating layer , a protective layer and a printing, wherein said printing is situated in-between said protective film and said multilayer rigid structure.

In a first aspect of the invention, the multilayer rigid sheet structure comprises a base layer, a tie layer and a seal layer.

In a second aspect of the invention, the multilayer rigid sheet structure further comprises a gas-barrier layer.

According to the present invention, the base layer is selected from the group consisting of PS, PET, PVC and PP.

According to another aspect of the present invention, the thermoset coating layer is based on resins selected from the group consisting of polyurethane, polyether, polyester, polyvinyl acetate, epoxy, acrylic, nitro cellulose and cellulose aceto-propionate.

According to still another aspect of the present invention, the protective layer is selected from the group consisting of PET, PETG and PA.

Advantageously, the gas-barrier layer is selected from the group consisting of EVOH and PA.

The present invention also discloses a method for the production of a one-portion pack wherein the following sequence is respected:
- in a first step, coextrusion, extrusion lamination, or extrusion-coating, and/or lamination of a base layer comprising optionally a gas-barrier layer;
- in a second step, coating and reverse printing of a protective layer, in-line recto verso, or coating and reverse printing of said layer in two consecutive stages;
- in a third step, adhesive lamination of the structure produced in the first step and the protective layer produced in the second step;
- in a fourth step, sealing of the structure realised in the third step against itself or against another sealable multilayer structure.

According to the present invention, a speed of at least 25 cycles/minute may be reached.

The present invention also discloses the use of the one-portion pack as described for the packaging of soft cheese, sauces, soaps and other liquid products.

### Detailed description of the invention

In order to overcome the above-mentioned problems, a combined solution is provided by means of a particular heat-resistant thermoset coating layer 2 on a base layer film 6 with deep-draw properties which itself is applied on top of the existing multilayer structures 1 as defined in the prior art.

High temperature resistant coatings are generally one or two component resins. Non-restrictive examples of such resins are polyurethane, polyether, polyester, polyvinyl acetate, epoxy resins, acrylic, nitro cellulose and cellulose aceto-propionate resins.

These resins are applied according to methods well known by those skilled in the art, such as the gravure, flexo or roll coating process combined with thermal or irradiation curing.
- The thermoset coating layer 2 (0.5-5g/m2) provides heat resistance of the structure up to 180°C. Examples of such coatings are RK25, LK20 en TK20 from the company Siegwerk.
- The protective layer 3 (5-50*µ*m) with deep-draw properties is selected from the group consisting of PET, PETG and PA suitable for reverse printing. Since the ink is then "inside" the film structure, and not outside, it becomes fully protected from any environmental contact. Non-restrictive examples of polymers to produce such films are Eastar 6763 from Eastman for PETG, Durethan from Bayer for PA6 and Crystar from Dupont for PET.

As a result of the present invention, other additional advantages are reached:
- Due to the presence of the heat resistant thermoset coating 2, some additional surface properties such as matt or glossy aspects and soft touch become possible.
- Furthermore, reverse printing on protective layer 3 allows for much shorter and cost-effective runs, compared to printing on the prior art structures.

### Examples

### Example 1: multilayer rigid sheet structure of 350 µm

Thermoset coating layer (1g/m2)// OPET (12 µm)//Printing// adhesive// PS base layer / tielayer / EVOH / tielayer / PE

### Example 2: multilayer rigid sheet structure of 300 µm

Thermoset coating layer (2 g/m2) // OPET (19 *µ*m)// Printing // adhesive // PS base layer / tielayer / EVOH / tielayer / PE peel

### Example 3: sheet structure of 350 µm.

Thermoset coating layer (1.5 g/m2)// PETG (25 µm)// Printing // adhesive // APET base layer / tielayer / PE peel multilayer rigid

The double slash (//) represents the separation on what can be considered as independent entities used in the different processing steps.

The production process of the multilayer of the present invention can be described as follows:
- in a first step, coextrusion, extrusion lamination, or extrusion-coating, and/or lamination of a base layer 6 optionally comprising a gas-barrier layer 5 (first entity);
- in a second step, coating and reverse printing of a protective layer 3, in-line recto verso, or coating and reverse printing of said layer 3 in two consecutive stages (second entity);
- in a third step, adhesive lamination of the structure produced in the first step and the protective layer 3 produced in the second step;
- in a fourth step, sealing of the structure performed in the third step against itself on the PE side or against another sealable rigid multilayer structure on the PE side.

If the colour of the one-portion pack is the same on the top and on the bottom, the multilayer structure of the present invention can be sealed against itself. If colour differences or different printings or rigid coextruded sheet structured are contemplated on top and bottom, two different multilayer structures of the present invention are sealed together. The multilayer of the present invention is always being sealed on the seal layer (which can also be a peelable seal layer).

The packaging process in high-speed packaging lines for one-portion packs can be described as follows:
- in a first step, two reel unwinding stations with speed centring control align the front and back multilayer sheet of the present invention;
- in the second step, both the front and back side sheets are preheated;
- in the third step, the shape of the final packaging is created in the forming moulds. This is obtained by allowing air pressure between the sheets. As a result the sheets are pressed against the moulds;
- in the fourth step, the sheet is cut into strips that are fed into horizontal transport chains and then forwarded further towards the filling station;
- in the fifth step, all units of a strip are filled with the product in the filling station;
- in the sixth step, the strips are first preheated prior to the sealing on top;
- in the seventh and last step, the portion packs are separated in a contour cutting station.

**Legend**
1. Multilayer rigid sheet structure according to the prior art
2. Thermoset coating layer
3. Protective layer
4. Seal layer (PE, EVA) optionally pealable
5. Gas-barrier layer
6. Base layer ( PS, PET, PVC, PA, PP)
7. Printing
8. Tielayer

## Claims

**1.** One-portion pack comprising a multilayer rigid sheet structure (1), a thermoset coating layer (2) a protective layer (3) and a printing (7), wherein said printing (7) is situated in-between said protective film (3) and said multilayer rigid structure (1)

**2.** One-portion pack according to Claim 1, wherein said multilayer rigid sheet structure (1) comprises a base layer (6), a tie layer and a seal layer (4) .

**3.** One-portion pack according to Claim 1, wherein said multilayer rigid sheet structure (1) further comprises a gas-barrier layer (5).

**4.** One-portion pack according to Claim 1, wherein said base layer (6) is selected from the group consisting of PS, PET, PVC and PP.

**5.** One-portion pack according to Claim 1, wherein said thermoset coating layer (2) is based on resins selected from the group consisting of polyurethane, polyether, polyester, polyvinyl acetate, epoxy, acrylic, nitro cellulose and cellulose aceto-propionate.

**6.** One-portion pack according to Claim 1, wherein said protective layer (7) is selected from the group consisting of PET, PETG and PA.

**7.** One-portion pack according to Claim 3, wherein said gas-barrier layer (5) is selected from the group consisting of EVOH and PA.

**8.** Method for the production of a one-portion pack, wherein the following sequence is respected:
- in a first step, coextrusion, extrusion lamination, or extrusion-coating, and/or lamination of a base layer 6 comprising optionally a gas-barrier layer 5;
- in a second step, coating and reverse printing of a protective layer 3, in-line recto verso, or coating and reverse printing of said layer 3 in two consecutive stages;
- in a third step, adhesive lamination of the structure produced in the first step and the protective layer 3 produced in the second step;
- in a fourth step, sealing of the structure realised in the third step against itself or against another sealable multilayer structure.

**10.** Method according to Claim 9, wherein a speed of at least 25 cycles/minute is reached.

**11.** Use of the one-portion pack as described in Claim 1 for the packaging of soft cheese, sauces, soaps, and similar liquid products.

## Amended claims

### Amended claims in accordance with Rule 86(2) EPC.

**1.** One-portion pack comprising a multilayer rigid sheet structure (1), a thermoset coating layer (2) a protective layer (3) and a printing (7), wherein said printing (7) is situated in-between said protective film (3) and said multilayer rigid structure (1)

**2.** One-portion pack according to Claim 1, wherein said multilayer rigid sheet structure (1) comprises a base layer (6), a tie layer and a seal layer (4).

**3.** One-portion pack according to Claim 1, wherein said multilayer rigid sheet structure (1) further comprises a gas-barrier layer (5).

**4.** One-portion pack according to Claim 1, wherein said base layer (6) is selected from the group consisting of PS, PET, PVC and PP.

**5.** One-portion pack according to Claim 1, wherein said thermoset coating layer (2) is based on resins selected from the group consisting of polyurethane, polyether, polyester, polyvinyl acetate, epoxy, acrylic, nitro cellulose and cellulose aceto-propionate.

**6.** One-portion pack according to Claim 1, wherein said protective layer (7) is selected from the group consisting of PET, PETG and PA.

**7.** One-portion pack according to Claim 3, wherein said gas-barrier layer (5) is selected from the group consisting of EVOH and PA.

**8.** Method for the production of a one-portion pack, according to Claim 1 wherein the following sequence is respected:
- in a first step, coextrusion, extrusion lamination, or extrusion-coating, and/or lamination of a base layer 6 comprising optionally a gas-barrier layer 5;
- in a second step, coating and reverse printing of a protective layer 3, in-line recto verso, or coating and reverse printing of said layer 3 in two consecutive stages;
- in a third step, adhesive lamination of the structure produced in the first step and the protective layer 3 produced in the second step;
- in a fourth step, sealing of the structure realised in the third step against itself or against another sealable multilayer structure.

**9.** Method according to Claim 8, wherein a speed of at least 25 cycles/minute is reached.

**10.** Use of the one-portion pack as described in Claim 1 for the packaging of soft cheese, sauces, soaps, and similar liquid products.
